# EUROPEAN PATENT APPLICATION

(11) **EP 4 553 958 A1**
(43) Date of publication of application: **14.05.2025**
(21) Application number: 24166949.8
(22) Date of filing: 27.03.2024
(51) Int. Cl.: H01M 10/6557, H01M 10/613, H01M 10/6568, H01M 50/207, H01M 50/325, H01M 50/505, H01M 50/521, H01M 10/6554, H01M 50/213, H01M 50/262

(54) **LIQUID COOLING ASSEMBLY, BATTERY MODULE, AND ELECTRICITY CONSUMPTION SYSTEM**

(30) Priority: 09.11.2023 CN 202323035817 U; 10.11.2023 CN 202311502503
(71) Applicant: Eve Energy Co., Ltd., Huizhou, Guangdong 516006 (CN)
(72) Inventor: REN, Chaoju, Huizhou, 516006 (CN)
(74) Representative: Murgitroyd & Company

(57) **Abstract**

The present disclosure discloses a liquid cooling assembly, a battery module, and an electricity consumption system. The liquid cooling assembly includes: a plurality of liquid cooling plates each extending in a first direction and including a liquid cooling chamber, where the plurality of liquid cooling plates are arranged at intervals in a second direction intersecting the first direction; and at least one connection pipe disposed between two adjacent ones of the liquid cooling plates and communicating with liquid cooling chambers of the two adjacent liquid cooling plates.

## Description

### TECHNICAL FIELD

The present disclosure relates to the field of battery technologies, and more particular to a liquid cooling assembly, a battery module, and an electricity consumption system.

### BACKGROUND

In the related art, a plastic corrugated pipe is used for interconnection between liquid cooling plates in a battery system, and the corrugated pipe is mounted in an expanded connection manner. The expanded connection of the corrugated pipe may have a high requirement for the consistency of stacking of modules. If deviation occurs in the stacking of the modules, the expanded connection cannot be performed or may be abnormal, resulting in low production yield of the products. Therefore, it is required that the modules are not stacked, and the expanded connection is performed sequentially for the modules one by one, and the operators are limited, so that the expanded connection cannot be performed by multiple operators at multiple stations, and the industrial efficient production cannot be performed.

### SUMMARY

The present disclosure provides a liquid cooling assembly, a battery module, and an electricity consumption system, so as solve the above technical problems.

Embodiments of the present disclosure provide a liquid cooling assembly, a battery module, and an electricity consumption system, which can improve the technical problems of difficulty and inefficiency in assembling of the liquid cooling system due to use of the corrugated pipe for assembling of the liquid cooling system.

In a first aspect, the present disclosure provides a liquid cooling assembly, including: a plurality of liquid cooling plates each extending in a first direction and including a liquid cooling chamber, where the plurality of liquid cooling plates are arranged at intervals in a second direction intersecting the first direction; and at least one connection pipe disposed between two adjacent ones of the liquid cooling plates and communicating with the liquid cooling chamber of each of the two adjacent ones; where two ones of the liquid cooling plates located at opposite sides of the liquid cooling assembly in the second direction are provided with a liquid inlet opening and a liquid outlet opening, respectively, and each of the liquid inlet opening and the liquid outlet opening is communicated with the liquid cooling chamber of the liquid cooling plate having the opening.

In a second aspect, the present disclosure provides a battery module, including: the above liquid cooling assembly, where a portion of the plurality of liquid cooling plates in the liquid cooling assembly are one or more first liquid cooling plates; and a plurality of cell rows arranged in the second direction; where each of the first liquid cooling plates is located between two adjacent ones of the cell rows and thermally coupled to the two adjacent ones.

In a third aspect, the present disclosure provides an electricity consumption system, including the above battery module.

In the embodiments of the present disclosure, beneficial effects of the present application are: the connection pipe is provided to connect the two adjacent ones of the liquid cooling plates, so that liquid cooling chambers of the two adjacent ones are communicated with each other. As such, compared with the related art in which the liquid cooling plates are connected in a manner of the expanded connection of the corrugated pipe, the connection pipe itself has a certain length and is directly connected between two liquid cooling plates, which is neither influenced by the spacing of the batteries and the size of the battery modules so the connection pipe has strong universality nor influenced by the consistency of the stacking of the battery modules. When the two adjacent liquid cooling plates are communicated with each other, it is only necessary to ensure that positions of the two adjacent liquid cooling plates where the connection pipe is mounted are opposite in the second direction. Based on this, Then, preassembly of the connection pipe and the liquid cooling plates can be performed when the stacking of the battery and the liquid cooling plates in the battery module are completed, and then uniform fixing of the connection pipe and the liquid cooling plates can be performed at the same time by a plurality of operators at a plurality of stations, so that the efficient production of the battery system can be realized, and the technical problems of difficulty and inefficiency in assembling of the liquid cooling system due to use of the corrugated pipe for assembling of the liquid cooling system can be effectively improved.

### DESCRIPTION OF THE DRAWINGS

FIG. 1 is a perspective diagram of a battery module according to some embodiments of the present disclosure.
FIG. 2 is a schematic diagram of the structure of a battery module according to some embodiments of the present disclosure.
FIG. 3 is an exploded schematic diagram of a battery module according to some embodiments of the present disclosure.
FIG. 4 is a perspective diagram of a liquid cooling assembly according to some embodiments of the present disclosure.
FIG. 5 is an exploded schematic diagram of a liquid cooling according to some embodiments of the present disclosure.
FIG. 6 is an enlarged structural schematic diagram of a position A in FIG. 5.
FIG. 7 is a perspective diagram of a connection pipe according to some embodiments of the present disclosure.
FIG. 8 is a partial cross-sectional diagram of a liquid cooling assembly according to some embodiments of the present disclosure.
FIG. 9 is a perspective diagram of the structure of a battery module according to some embodiments of the present disclosure.
FIG. 10 is a schematic diagram of the structure of a battery module according to some embodiments of the present disclosure.
FIG. 11 is a perspective diagram of the structure of a cell according to some embodiments of the present disclosure.
FIG. 12 is a bottom diagram of a cell according to some embodiments of the present disclosure.
FIG. 13 is a perspective diagram of the structure of a battery module according to another embodiment of the present disclosure.
FIG. 14 is a perspective diagram of the structure of a battery module according to yet another embodiment of the present disclosure.

### REFERENCE NUMERALS OF THE ACCOMPANYING DRAWING:

1000-battery module; 100-liquid cooling assembly; 1-liquid cooling plate; 10-liquid cooling chamber; 1A-liquid inlet opening; 1B-liquid outlet opening; 20-pipe group; 2-connection pipe; 21-first sub-pipe section; 22-second sub-pipe section; 3-connection member; 4-sealing ring; 5-accommodating groove; 6-cell row; 61-cell; 31-first liquid cooling plate; 101-first cell row; 21A-first adhesive layer; 32-second liquid cooling plate; 22A-second adhesive layer; 33-connection structure; 12-negative electrode; 13-insulating film; 11-positive electrode; 40-support; 401-cell mounting groove; 14-pressure relief valve; 402- pressure relief hole; 403-positioning hole; 4031-first positioning hole; 4032-second positioning hole; and 50-integrated bus bar assembly.

### DETAILED DESCRIPTION

Technical solutions of the present disclosure are further explained below by the detailed description. It should be understood by those skilled in the art that the embodiments are merely illustrative of the present disclosure and should not be construed as limiting the present disclosure.

In the related art, a plastic corrugated pipe is used for interconnection between liquid cooling plates in a battery system, and the corrugated pipe is mounted in an expanded connection manner. The expanded connection of the corrugated pipe may have a high requirement for the consistency of stacking of modules. If deviation occurs in the stacking of the modules, the expanded connection cannot be performed or may be abnormal, resulting in low production yield of the products. Therefore, it is required that the modules are not stacked, and the expanded connection is performed sequentially for the modules one by one, and the operators are limited, so that the expanded connection cannot be performed by multiple operators at multiple stations, and the industrial efficient production cannot be performed.

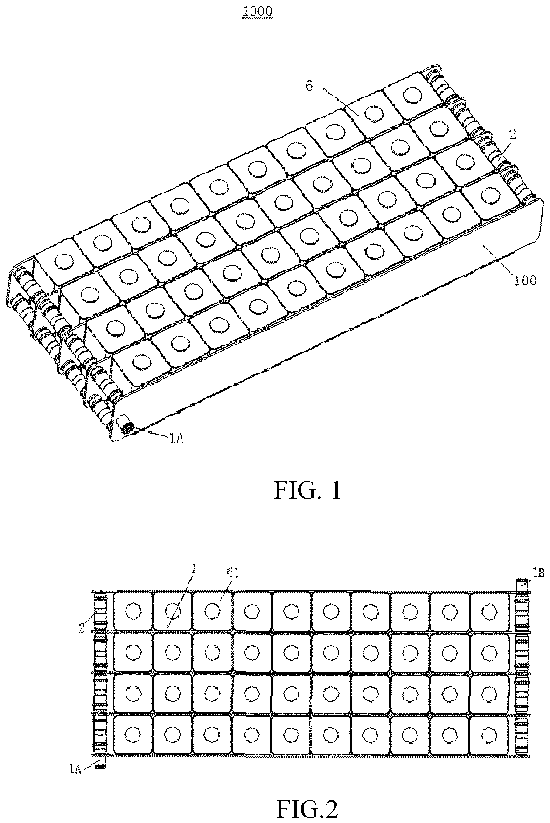

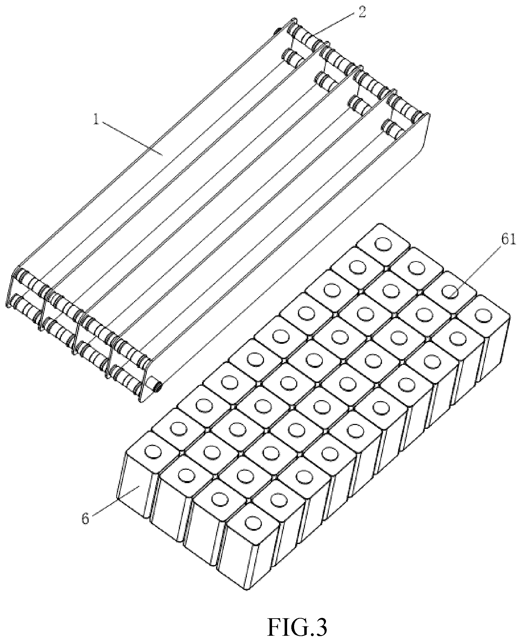

In view of this, the present disclosure proposes a liquid cooling assembly. FIGS. 1 to 14 show some embodiments of the present disclosure.

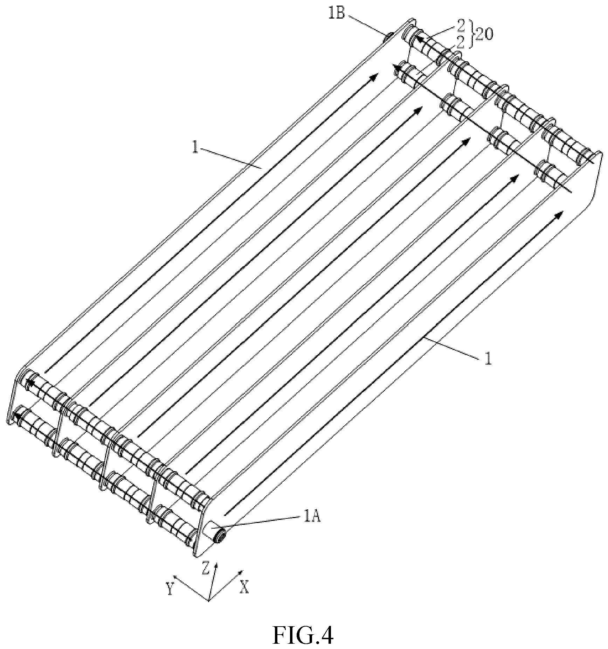

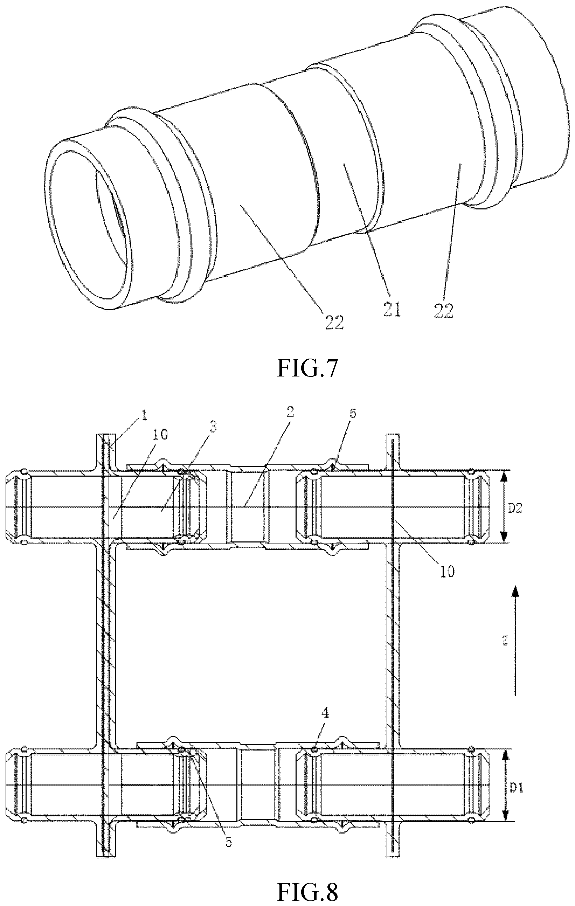

Referring to FIGS. 4 and 8, the liquid cooling assembly 100 includes: a plurality of liquid cooling plates 1 each extending in a first direction and including a liquid cooling chamber 10, where the plurality of liquid cooling plates 1 are arranged at intervals in a second direction intersecting the first direction; and at least one connection pipe 2 disposed between two adjacent liquid cooling plates 1 and communicating with the liquid cooling chambers 10 of the two adjacent liquid cooling plates 1; where two ones of the liquid cooling plates located at opposite sides of the liquid cooling assembly in the second direction are provided with a liquid inlet opening 1A and a liquid outlet opening 1B, respectively, and each of the liquid inlet opening 1A and the liquid outlet opening 1B is communicated with the liquid cooling chamber of the liquid cooling plate having the opening.

In the embodiments of the present disclosure, the connection pipe 2 is provided to connect the two adjacent ones of the liquid cooling plates 1, so that the liquid cooling chambers 10 of the two adjacent liquid cooling plates 1 are communicated with each other. As such, compared with the related art in which the liquid cooling plates 1 are connected in a manner of the expanded connection of the corrugated pipe, the connection pipe 2 itself has a certain length and is directly connected between two liquid cooling plates 1, which is neither influenced by the spacing of the cells 61 and the size of the cell rows 6 so the connection pipe 2 has strong universality nor influenced by the consistency of the stacking of the cell rows 6. When the two adjacent liquid cooling plates 1 are communicated with each other, it is only necessary to ensure that positions of the two adjacent liquid cooling plates 1 where the connection pipe 2 is mounted are opposite in the second direction. Based on this, Then, preassembly of the connection pipe 2 and the liquid cooling plates 1 can be performed when the stacking of the cells 61 and the liquid cooling plates 1 in the cell rows 6 are completed, and then uniform fixing of the connection pipe 2 and the liquid cooling plates 1 can be performed at the same time by a plurality of operators at a plurality of stations, so that the efficient production of the battery system 1000 can be realized, and the technical problems of difficulty and inefficiency in assembling of the liquid cooling system due to use of the corrugated pipe for assembling of the liquid cooling system can be effectively improved.

It should be noted that an X direction represents the first direction, and a Y direction represents the second direction, as shown in FIG. 4. An angle at which the first direction and the second direction intersect each other is not limited, and may be 90°, 85°, or 80°. In a preferred embodiment of the present disclosure, an included angle between the first direction and the second direction is set to be 90°.

Further, the liquid inlet opening 1A and the liquid outlet opening 1B of the liquid cooling assembly 100 are provided on the two liquid cooling plates 1, respectively, so that the structure of the liquid cooling assembly 100 is simple without other pipelines for transmitting cooling liquid. The liquid inlet opening 1A and the liquid outlet opening 1B are symmetrically arranged in the liquid cooling assembly 100 in a central axis and located on two opposite liquid cooling plates 1 of the liquid cooling assembly 100 in the second direction, thereby facilitating rapid assembling of the liquid cooling assembly 100 and an external part structure and rapid assembling of industrialization, and ensuring that the liquid inlet opening 1A and the liquid outlet opening 1B have consistent positions, flow volumes and flow rates.

It should be understood that the liquid cooling plates 1 extend in the first direction and a shape of each of the liquid cooling plates 1 in the first direction is not limited. The liquid cooling plate 1 may be provided in a serpentine shape, a flat plate shape, or a special-shaped shape. In a specific embodiment of the present disclosure, the liquid cooling plates 1 are disposed in a flat plate shape in the first direction. In the liquid cooling plates 1 having the same length and disposed in the serpentine shape or the flat plate shape in the first direction, a flow path of a cooling liquid in the liquid cooling chamber 10 of the liquid cooling plate 1 disposed in the flat plate shape is shorter than that of the cooling liquid in the liquid cooling chamber 10 of the liquid cooling plate 1 disposed in the serpentine shape, so that a renewal speed of the cool liquid in the liquid cooling plate 1 can be accelerated and the heat exchange efficiency can be improved.

Further, on the basis of the above embodiments, a hollow connection member 3 is mounted at a position of each of the liquid cooling plates 1 corresponding to the connection pipe 2, where the connection member 3 extends in the first direction and communicates with the liquid cooling chamber 10 of the liquid cooling plate 1, and at least a portion of the connection pipe 2 is sleeved on the peripheral side of the connection member 3. The connection pipe 2 is fixedly connected to the two adjacent liquid cooling plates 1 by first sleeving two ends of the connection pipe 2 to opposite connection members 3 of the two adjacent liquid cooling plates 1, and then tightening a part of the connection pipe 2 sleeved on the connection members 3 by means of clamping, that is, tightening gaps between the connection pipe 2 and the connection members 3, to enable an inner wall of a pipe chamber of the connection pipe 2 to abut against the outer periphery of the connection members 3, thereby completing assembling of the connection pipe 2 and the connection member 3. Compared with the related art in which the liquid cooling plates 1 are connected in a manner of the expanded connection of the corrugated pipe, the connection pipe 2 and the connection member 3 are assembled by means of clamping, so that the liquid cooling system can be simplified and efficiently assembled, and stacking of the plurality of cells 61 in the cell row 6 and stacking of the liquid cooling plates 1 disposed between the plurality of cells 61 are simplified.

It should be understood that, when the connection pipe 2 is sleeved on the connection member 3 and is not tightened by means of clamping, the connection pipe 2 is movable in the second direction relative to the connection member 3. Therefore, when the liquid cooling assembly 100 and the cell rows 6 are assembled, the connection pipe 2 can be freely and movably adjusted according to the deviation of the cell rows 6, that is, may be not affected by different distances between the two adjacent liquid cooling plates 1 at different positions. After the cell rows 6 have been assembled, the connection pipe 2 is tightened on the connection member 3 by means of clamping. In summary, the connection pipe 2 is highly adaptable and simple to assemble.

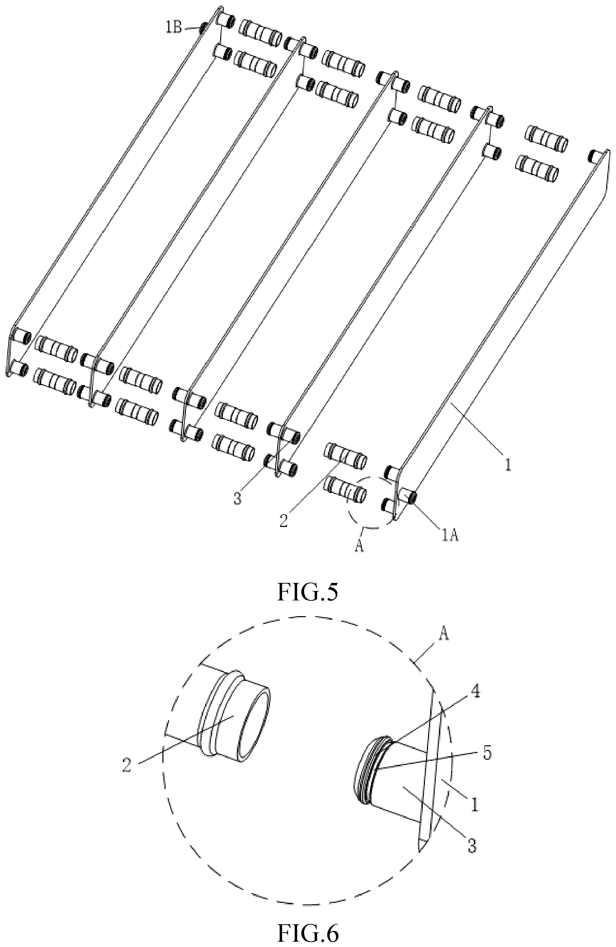

Referring to FIGS. 5, 6 and 8, a sealing ring 4 is further mounted between the connection pipe 2 and the connection member 3. The sealing ring 4 has elasticity. After the connection pipe 2 and the connection member 3 are fixed, the sealing ring 4 can seal a gap between the connection pipe 2 and the connection member 3, so as to avoid leakage of liquid between the connection pipe 2 and the connection member 3. A specific installation position of the sealing ring 4 is not limited. In some embodiments of the present disclosure, the sealing ring 4 may be mounted in the pipe chamber of the connection pipe 2. In another embodiment of the present disclosure, the sealing ring 4 may be mounted at the peripheral side of the connection member 3.

Further, an accommodating groove 5 is annularly disposed at the peripheral side of the connection member 3, where at least a portion of the sealing ring 4 is accommodated within the accommodating groove 5. That is, the sealing ring 4 is mounted on the connection member 3, and the accommodating groove 5 is provided so that the sealing ring 4 is elastically engaged with the accommodating groove 5 to limit the movement of the sealing ring 4 when the sealing ring 4 is mounted on the connection member 3, thereby preventing the sealing ring 4 from being detached from the connection member 3. Accordingly, the number of sealing rings 4 mounted on the connection member 3 is not limited, and one or more of the sealing rings 4 may be mounted on the connection member 3, and the number of accommodating grooves 5 corresponding to the number of the sealing rings 4 should be provided on the connection member 3.

It should be understood in the embodiment in which the sealing ring 4 is mounted in the pipe chamber of the connection pipe 2 that a groove may be also provided in the pipe chamber of the connection pipe 2, and the sealing ring 4 is inserted into the groove, so that limited installation of the sealing ring 4 is completed.

In the above two embodiments, on the basis of limitation of the seal ring 4, the connection pipe 2 is not clamped between the connection members 3, and the relative movement between the connection pipe 2 and the connection members 3 in the second direction does not affect limited assembling of the seal ring 4.

Specifically, referring to FIG. 8, at least one accommodating groove 5 is provided in the outer periphery of the connection member 3 and in the pipe chamber of the connection pipe 2 (the sealing ring 4 located in the accommodating groove 5 of the connection pipe 2 is not shown in FIG. 8), where the accommodating groove 5 of the connection pipe 2 and the accommodating groove 5 of the connection member 3 are respectively formed in such a manner that the connection tube 2 and the connection member 3 are partially deformed, so as to avoid a problem that the connection tube 2 and the connection member 3 are not fixed securely due to thin walls of a portion of the connection tube 2 and the connection member 3 forming the accommodating grooves 5.

Further, referring to FIGS. 7 to 8, the connection pipe 2 includes a first sub-pipe section 21 and two second sub-pipe sections 22, where the two second sub-pipe sections 22 are located at opposite ends of the first sub-pipe section 21 in the second direction and communicate with the first sub-tube section 21, respectively. The diameter of the second sub-pipe section 22 is greater than the diameter of the first sub-pipe section 21, and the second sub-pipe sections 22 are correspondingly sleeved on the connection members 3. Since the diameter of the second sub-pipe section 22 is greater than the diameter of the first sub-pipe section 21, the connection member 3 cannot be moved into the first sub-pipe section 21 and has a movable stroke limit at a certain distance.

Further, a material of the connection pipe 2 includes metal. The connection pipe 2 is made of a metal material, so as to ensure that the connection pipe 2 and the liquid cooling plate 1 can be fixed securely by means of clamping, that is, the connection pipe 2 is fixed securely with the connection members 3. In a specific embodiment of the present disclosure, the material of the connection pipe 2 is aluminum.

Referring to FIG. 4 again, an orthographic projection of the connection pipe 2 on the liquid cooling plates 1 in the second direction entirely falls on the liquid cooling plates 1. Specifically, the connection pipe 2 extends in the second direction, so that the connection pipe 2 is positioned between two adjacent liquid cooling plates 1 after assembling of the connection pipe 2 and does not protrude from an enclosed space between the two adjacent liquid cooling plates 1 in either direction. Therefore, a space occupied by the liquid cooling assembly 100 and the cell rows 6 after assembling of the liquid cooling assembly 100 and the cell rows 6 is smaller and an integration degree of the liquid cooling assembly 100 and the cell rows 6 is higher.

Referring to FIGS. 4 to 5, four connection pipes 2 may be disposed between two adjacent liquid cooling plates 1, every two ones of the connection pipes 2 may be defined as one pipe group 20, and two pipe groups 20 are disposed oppositely in the first direction. Since the two pipe groups 20 are disposed oppositely in the first direction, two adjacent liquid cooling plates 1 are connected in parallel to each other by the two pipe groups 20 to increase a flow rate of a cooling liquid in the liquid cooling assembly 100 and achieve rapid cooling of the cell rows 6. Each of the pipe groups 20 includes two connection pipes 2 to increase a flow volume of the cooling liquid between the two adjacent liquid cooling plates 1 while a problem of excessive communication interface between the connection tubes 2 and the liquid cooling plates 1 can be avoided by using the two connection pipes 2 in each of the pipe groups 20 compared to using one connection tube 2 in one pipe group 20 on the basis of keeping the flow volume unchanged.

Specifically, the two connection pipes 2 in each of the pipe groups 20 are arranged at intervals in a third direction. The third direction represents a Z direction in FIG. 4. The Z direction is arranged at an included angle with the X and Y directions, respectively, and the included angle is 90°.

Referring to FIG. 4 again, a flow direction of the cooling liquid in the liquid cooling assembly 100 is indicated by an arrow in FIG. 4. The number of liquid cooling channels of the liquid cooling chamber 10 formed in the liquid cooling plate 1 is not limited, and may be one or more. In some embodiments of the present disclosure, one liquid cooling channel may be provided. In another embodiment of the present disclosure, a plurality of liquid cooling channels may be provided.

On the basis of providing the one liquid cooling channel, the liquid cooling channel extends in the first direction. It is defined that a diameter of one of the connection pipes 2 in each of the pipe groups 20 is D1, and a diameter of another one of the connection pipes 2 is D2, where a relationship between the D1 and the D2 satisfy: 1.1D1≤D2≤1.5D1. In the embodiments, a plurality of connection pipes 2 communicating with each other in the second direction constitute a connection pipe line, that is, there are two connection pipe lines arranged at intervals in the third direction. The diameters of the two connection pipes 2 in each of the pipe groups 20 are limited to conform to the relationship, so that the flow rates and the flow volumes of the cooling liquid in the two connection pipes can be kept consistent. If the values of D1 and D2 does not conform to the relationship, the flow volumes and the flow rates of the cooling liquid in the liquid cooling assembly 100 are inconsistent, which causes poor heat dissipation. Specifically, an example in which the Z direction represents an up-down direction in FIG. 4 is taken for illustration. That is, two connection pipes 2 located in one of the pipe groups 20 are arranged in the up-down direction, where the diameter of the lower pipe group 20 located in the up-down direction is D1, and the diameter of the upper group 20 located in the up-down direction is D2. It should be noted that the upper-lower direction is also the third direction described above.

On the basis of disposing the plurality of liquid cooling channels, each of the liquid cooling channels extends in the first direction. Each of the liquid cooling plates 1 includes a plurality of liquid cooling channels extending in the first direction, and the liquid cooling chamber 10 of the liquid cooling plate 1 includes a plurality of liquid cooling channels. Two connection pipes 2 in one of the pipe groups 20 have the same diameter. It is defined that the number of liquid cooling channels is A, where the A satisfies: 2≤A≤6. That is, in the embodiment, the number of the liquid cooling channels is within the range, and it is possible to ensure that the flow rates and the flow volumes in the connection pipe lines are consistent without adjusting the diameters of the two connection pipes 2 located in the third direction.

The present disclosure further provides a battery module 1000, including: a plurality of cell rows 6 and a plurality of first liquid cooling plates 31.

The plurality of cell rows 6 and the plurality of first liquid cooling plates 31 are arranged in the second direction Y, respectively, and each of the first liquid cooling plates 31 is positioned between two adjacent ones of the cell rows 6 and thermally coupled to the two adjacent cell rows 6.

As such, by thermally coupling the first liquid cooling plate 31 to the cell rows 6, heat generated by the cell rows 6 can be conducted and carried away through the first liquid cooling plate 31, so that thermal expansion of the cells in the cell rows 6 due to the heat accumulating around the cell rows 6 can be effectively prevented, thereby affecting the service life of the cells. Further, since the first liquid cooling plate 31 is positioned between two adjacent cell rows 6, the heat generated by the two cell rows 6 can be well dissipated by one of first liquid cooling plates 31, thereby effectively improving the heat dissipation efficiency of the cell rows 6.

In some examples, one of the first liquid cooling plates 31 is positioned between any two adjacent ones of the cell rows 6, so that it is possible to ensure that the heat generated by each of the plurality of cell rows 6 except the first cell rows 101 at both ends of the plurality of cell rows 6 in the second direction Y may be dissipated by two ones of the first liquid cooling plates 31, thereby further improving the heat dissipation efficiency of the cell rows 6. As such, it may be ensured that the cells in the cell rows 6 can also control the temperature of the cells in a safe temperature range in a high-rate fast charging mode.

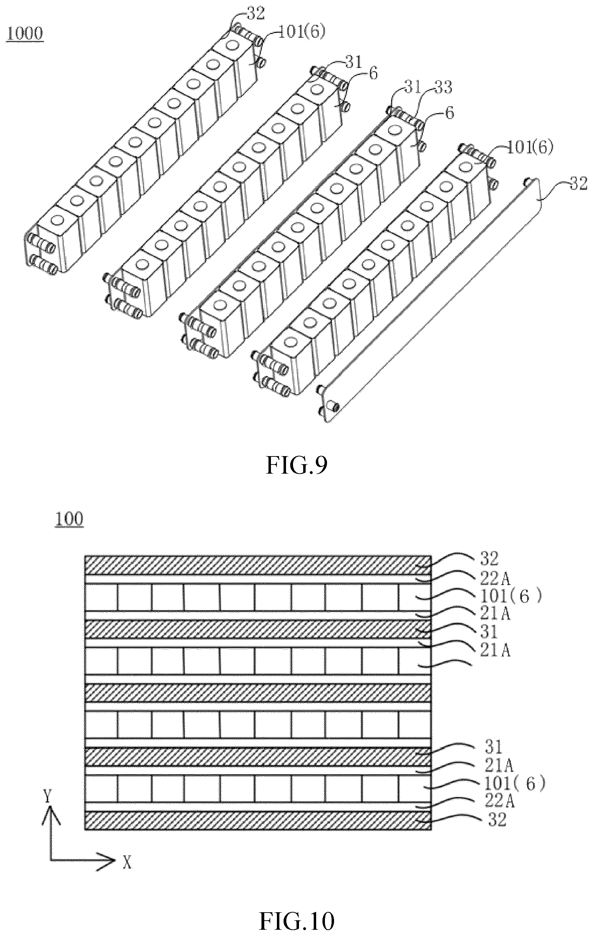

In some embodiments, as shown in FIG. 10, the battery module 1000 further includes a plurality of first adhesive layers 21A, each of which is located between one first liquid cooling plate 31 and one cell row 6 adjacent to the first liquid cooling plate 31. By providing the first adhesive layer 21A, on the one hand, connection between the cell row 6 and the first liquid cooling plate 31 can be realized, and on the other hand, thermal coupling between the cell row 6 and the first liquid cooling plate 31 can be realized, so that the cell row 6 is efficiently thermally conductive.

In some examples, a material of the first adhesive layer 21A is foam double-sided glue.

The foam double-sided glue has features, such as a strong adhesive force and a good retention force, so that a good bonding stability between the cell row 6 and the first liquid cooling plate 31 can be ensured. In addition, the foam double-sided glue further has features, such as ultraviolet protection, water solubility resistance, and plasticity resistance, so that the foam double-sided glue can guarantee a long service life of the battery module, thereby improving the service stability of the battery module. On the other hand, the foam double-sided glue has good heat conductivity, and it is possible to ensure good heat conduction between the cell row 6 and the first liquid cooling plate 31, thereby facilitating heat dissipation of the cell row 6.

In some embodiments, as shown in FIGS. 9 and 10, the battery module 1000 further includes at least one second liquid cooling plate 32, the plurality of cell rows 6 include a first cell row 101 located at an end of the plurality of cell rows 6 in the second direction Y, and one second liquid cooling plate 32 is located on a side of the first cell row 101 away from the plurality of cell rows 6 and thermally coupled to the first cell row 101.

As such, the second liquid cooling plate 32 can be configured to further perform heat radiation to the first cell row 101, so that the first cell row 101 is double-radiated by the first liquid cooling plate 31 and the second liquid cooling plate 32 located at both sides of the first cell row 101, respectively, thereby improving the heat radiation efficiency of the first cell row 101 and prolonging the service life of the cells in the first cell row 101.

In some examples, the at least one second liquid cooling plate 32 includes two second liquid cooling plates 32 located at both ends of the plurality of battery cells 6 in the second direction Y, respectively, where each of the two second liquid cooling plates 32 is located at a side of the corresponding one of first cell rows 101 away from the plurality of cell rows 6 and thermally coupled to the corresponding first cell row 101. As such, a double heat dissipation is performed for the first row rows 101 located at both ends of the plurality of cell rows 6 in the second direction Y, thereby effectively improving the overall heat dissipation efficiency of the battery module 1000.

Illustratively, the second liquid cooling plate 32 may be identical to the first liquid cooling plate 31, and there is only a difference in the positional arrangement between the first liquid cooling plate 31 and the second liquid cooling plate 32, which facilitates production and fabrication of the liquid cooling plates.

Illustratively, the second liquid cooling plate 32 and the first liquid cooling plate 31 each have a liquid inlet opening, a liquid outlet opening, and a liquid cooling channel, respectively, where the cooling liquid can flow into the liquid cooling channel through the liquid inlet opening and then flow out from the liquid outlet opening, so that the flowed cooling liquid can carry away the surrounding heat, thereby realizing cooling of the battery module 1000.

In some examples, the first liquid cooling plate 31 has a first liquid cooling channel, and the second liquid cooling plate 32 has a second liquid cooling channel, where the volume of the first liquid cooling channel is greater than the volume of the second liquid cooling channel.

A larger volume of the cooling liquid contained in the first liquid cooling plate 31 can be implemented by enabling the volume of the first liquid cooling channel to be greater than the volume of the second liquid cooling channel, thereby facilitating the heat dissipation of the cell rows 6 at both sides of the first liquid cooling plate 31. On the other hand, the second liquid cooling plate 32 only needs to dissipate heat from the first cell row 101 located at one side of the second liquid cooling plate 32 and is provided with a small volume, thereby facilitating the miniaturization of the battery module 1000 while improving the uniformity of heat dissipation for all of cell rows 6.

Illustratively, the thickness of the first liquid cooling plate 31 is greater than that of the second liquid cooling plate 32, so that the volume of the first liquid cooling channel is greater than that of the second liquid cooling channel while the size of the battery module 1000 in the second direction Y can be reduced.

In some examples, the thickness of the first liquid cooling plate 31 is between 1 mm and 5 mm, that is, the size of the first liquid cooling plate 31 in the second direction Y is greater than or equal to 1 mm and less than or equal to 5 mm. As such, the first liquid cooling plate 31 can have a relatively reasonable thickness, thereby ensuring efficient heat dissipation of the cell rows 6 while further ensuring that the battery module has a relatively small volume and a relatively large output power.

In some examples, the thickness of the second liquid cooling plate 32 is between 1 mm and 5 mm, that is, the size of the second liquid cooling plate 32 in the second direction Y is greater than or equal to 1 mm and less than or equal to 5 mm. As such, the second liquid cooling plate 32 can have a relatively reasonable thickness, thereby ensuring efficient heat dissipation of the cell rows 6 while further ensuring that the battery module has a relatively small volume and a relatively large output power.

When the thickness of the first liquid cooling plate 31 is greater than that of the second liquid cooling plate 32, the thickness of the first liquid cooling plate 31 and the thickness of the second liquid cooling plate 32 may be taken in the above-mentioned thickness ranges, but it is necessary to ensure that the thickness of the first liquid cooling plate 31 is greater than that of the second liquid cooling plate 32, so that the uniformity of heat dissipation for all of cell rows 6 is enhanced by the liquid cooling plates having different thicknesses.

In some embodiments, as shown in FIG. 10, the battery module 1000 further includes at least one second adhesive layer 22A, where one second adhesive layer 22Ais located between one second liquid cooling plate 32 and one first cell row 101 corresponding to the second liquid cooling plate 32. By providing the second adhesive layer 22A, on the one hand, the connection between the second liquid cooling plate 32 and the first cell row 101 corresponding to the second liquid cooling plate 32 can be realized, and on the other hand, the thermal coupling between the first cell row 101 and the second liquid cooling plate 32 can be further realized, so that the cell row 6 is efficiently thermally conductive.

In some examples, at least one second adhesive layer 22A includes two second adhesive layers 22A, each of which is located between one second liquid cooling plate 32 and the first cell row 101 corresponding to the second liquid cooling plate 32. This advantageously provides good heat conduction to the first cell row 101 at both ends of the plurality of cell rows 6 in the second direction Y while ensuring the connection stability between the first cell row 101 and the second liquid cooling plate 32 corresponding to the first cell row 101.

In some examples, a material of the second adhesive layer 22A may be consistent with the material of the first adhesive layer 21A, which is advantageous to ensure overall uniformity and stability of the battery module 1000.

In some embodiments, as shown in FIG. 9, the battery module 1000 further includes a plurality of connection structures 33, each of which is connected to two adjacent ones of the first liquid cooling plates 31. This helps to further improve the stability between the first liquid cooling plates 31 and the cell rows 6.

In some examples, two adjacent first liquid cooling plates 31 are connected by four connection structures, which are respectively located at four corners of the first liquid cooling plates 31.

Illustratively, the connection structures are detachable connection structures. For example, one end of each of the connection structures is bonded to one first liquid cooling plate 31, and another end of the connection structure is bonded to another first liquid cooling plate 31. For another example, each of the connection structures may be a snap-in structure in which a first portion of the snap-in structure is fixed to one first liquid cooling plate 31 and a second portion of the snap-in structure is fixed to another first liquid cooling plate 31, and the two adjacent first liquid cooling plates 31 can be connected by snap-in connection of the first portion and the second portion. The present disclosure is not limited to the specific arrangement of the connection structure, as long as the detachable connection between the two adjacent first liquid cooling plates 31 can be realized by the connection structure.

In some examples, a connection member identical to the above connection structure is provided between the second liquid cooling plate 32 and the first liquid cooling plate 31 adjacent to the second liquid cooling plate 32, which is advantageous for improving the stability between the second liquid cooling plate 32 and the first cell row 101.

In some embodiments, as shown in FIGS. 9 and 10, each of the cell rows 6 includes a plurality of cells 61 arranged in the first direction X, where the first direction X is perpendicular to the second direction Y By assembling the plurality of cells 61, it is possible to realize larger power output of the battery module 1000 while performing heat dissipation of the cells 61 using the first cooling plate 31 and the second liquid cooling plate 32, thereby ensuring a stable operation of the battery module 1000.

In a manufacturing process of the battery module 1000, each of cells 61 in a cell row 6 is adhered to a liquid cooling plate (for example, the first liquid cooling plate 31 or the second liquid cooling plate 32) in sequence by an adhesive layer (for example, the first adhesive layer 21A or the second adhesive layer 22A) to form a cell block while the operation is repeatedly performed for other cell rows 6 to form a plurality of cell blocks, and then all of cell blocks are adhered in sequence by the adhesive layer, and then one second liquid cooling plate 32 is adhered to the cell row 6 of one cell block located at an edge of all of cell blocks, so as to form a cell assembly, and finally, the cell assembly is connected with other components such as a support to form a battery module. In this manner, the production process of the battery module 1000 is simple, the production efficiency of the battery module 1000 is high, and it is also possible to avoid uneven heat conduction due to the presence of air bubbles between the cells 61 and the liquid cooling plate by using the adhesive layer, thereby ensuring the consistency of a liquid cooling effect of the cells.

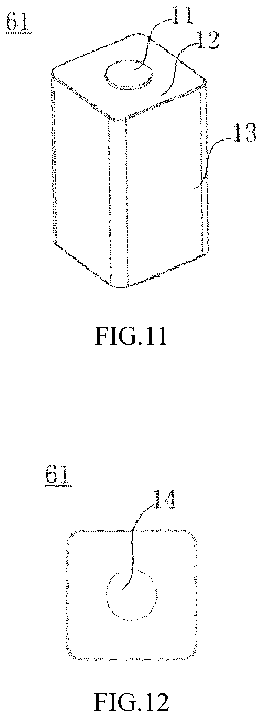

In some embodiments, as shown in FIG. 11, each of the cells 61 includes a housing and a negative electrode 12, both of which are steel in material. The steel has a high strength. When the cell 61 is expanded by heating, the steel can resist a force exerted by expansion of the cell, thereby reducing radial expansion of the cell 61 after heating of the cell 61 and ensuring the stability of the cell 61.

In some examples, the housing and the negative electrode 12 are integrally formed, so as to facilitate fabrication of the cell 61 while ensuring that the cell 61 has a high strength, thereby resisting a radial force exerted by expansion of the cell 61.

In some examples, as shown in FIG. 11, the cell 61 further includes an insulating film 13 disposed coaxially with the housing, where the insulating film 13 is sleeved on an outer side of the housing. Two adjacent cells 61 can be insulated by the insulating film 13.

In some examples, as shown in FIGS. 11 and 12, the size of each of the cells 61 in the first direction is equal to the size of the cell 61 in the second direction, i.e., each of the cells 61 is a square cell.

Illustratively, each of the cells 61 is a cylindrical cell, the cell 61 has a rounded square cross-section in a first plane, and the first plane is a plane perpendicular to a height direction of the cell 61, so that a sharp corner of the cell 61 can be prevented from causing scratches to surrounding parts.

In some examples, as shown in FIGS. 11 and 12, the cell 61 further includes a positive electrode 11, where the positive electrode 11 is disposed at the same side of the cell 61 as the negative electrode 12, so as to facilitate connection between the positive electrode 11 and the negative electrode 12 and an associated element, such as a busbar.

Illustratively, a material of the positive electrode 11 is aluminum, an oxidation potential of the aluminum is high, and a layer of dense oxide film is formed on the surface of the positive electrode 11, which has a certain protective effect on the aluminum.

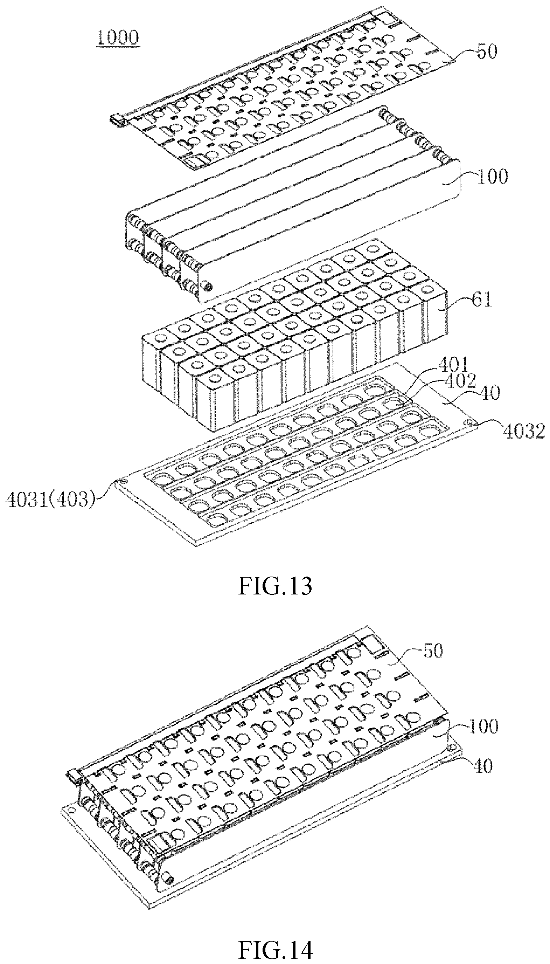

In some embodiments, as shown in FIG. 13, the battery module further includes a support 40 on which a plurality of cell mounting grooves 401 are provided, where each of the cell rows 6 is located in corresponding one of the cell mounting grooves 401.

In some examples, each of the cell mounting grooves 401 is arranged in the first direction X, and the length of the cell mounting groove 401 corresponds to the length of the cell row 6 (i.e., the distance between the two ends of the cell row 6 in the first direction X). This may enable the cell row 6 to be well mounted onto the support 40, thereby facilitating the connection between the cell row 6 and other parts.

In some embodiments, as shown in FIGS. 11-13, the cell 61 further includes a pressure relief valve 14 located at a side of the cell away from the positive electrode 11, where the cell mounting groove 401 is provided with a plurality of pressure relief holes 402 each corresponding to the pressure relief valve 14 of corresponding one of the cells 61. The pressure relief valve 14 and the positive electrode 11 are located at both sides of the cell 61, so that there is a large space for arrangement of the pressure relief valve 14, and the pressure relief valve 14 does not affect the arrangement of the busbar connected to the cell 61.

In some examples, after the cell row 6 is mounted onto the support 40, the pressure relief valve of each of the cells 61 is disposed opposite to corresponding one of the pressure relief holes 402. As such, when an abnormality occurs in the cell, the pressure relief valve 14 can be normally opened to discharge high-temperature and high-pressure gas and a pole piece inside the cell, and the like, thereby effectively preventing diffusion of thermal runaway.

In some examples, the size and the shape of the pressure relief valve 14 fit the size and shape of the pressure relief hole 402, thereby facilitating normal pressure relief of the cell 61.

In some embodiments, as shown in FIGS. 11-13, each of the pressure relief valves 14 is partially located in corresponding one of the pressure relief holes. As such, when the cell rows 6 are mounted onto the support 40, a portion of the pressure relief valve 14 of each of the cells 6 may be located in the corresponding one of the pressure relief holes 402, thereby facilitating accurate positioning of the cell 61.

In some examples, the pressure relief valve 14 is provided in contact with a side wall of the corresponding pressure relief hole 402, which is advantageous for improving stable installation of the cell 61.

In some embodiments, as shown in FIG. 13, the support 40 is further provided with a plurality of positioning holes 403, where each of first positioning holes 4031 has a circular cross-section in a second plane, each of second positioning holes 4032 has a rounded rectangular cross-section in the second plane, and the second plane is perpendicular to the first plane. The rounded rectangular second positioning hole 4032 is advantageous to find an associated positioning point so as to achieve a quick positioning, while combination of the circular first positioning hole 4031 with the rounded rectangular second positioning hole 4032 can achieve positioning accuracy. In addition, positioning of the support 40 is performed through positioning holes having different shapes, which is advantageous for ensuring that the positioning between the support 40 and associated parts, such as a case for enclosing the battery module, is within a tolerance range.

In some embodiments, as shown in FIGS. 13 and 14, the battery module 1000 further includes an integrated bus bar assembly 50 that includes a busbar that is electrically connected to the positive and negative electrodes of each of the cells 61. All of cells 61 may be connected in series and/or in parallel by the busbar, thereby enabling the battery module to supply power to an electricity consumption system.

In some examples, the integrated bus bar assembly 50 further includes a first insulating film and a second insulating film disposed at both sides of the busbar, where the first insulating film, the busbar, and the second insulating film are fixed by hot pressing. Illustratively, the first insulating film and the second insulating film may be polyethylene terephthalate (PET) blue films, and the busbar and the insulating films may be fixed integrally by hot pressing, thereby facilitating alignment connection between the busbar and the cells. In the above manner, the manufacturing cost of the integrated bus bar assembly 50 can be reduced, while the integrated bus bar assembly 50 can be made to have a relatively light overall quality and a good integrated effect.

In some examples, the integrated bus bar assembly 50 further includes a Flexible Printed Circuit Assembly (FPCA) electrically connected to the busbar and located between the first insulating film and the second insulating film. The information of the cell 61 can be collected by the FPCA, thereby facilitating monitoring and management of an operation state of the cell 61.

Some embodiments of the present disclosure further provide an electricity consumption system, including the above battery module 1000. The electricity consumption system may be a vehicle (e.g., Supercar), a portable device, a notebook computer, a ship, a spacecraft, an electric toy, or the like. The vehicle may be a fuel vehicle, a gas vehicle, or a new energy vehicle, where the new energy vehicle may be a pure electric vehicle, a hybrid vehicle, an extended range vehicle, or the like. The spacecraft may include an aircraft, a rocket, a shuttle, a spaceship, or the like. The electric toy may include a fixed or mobile electric toy, such as a gaming machine, an electric car toy, an electric boat toy, an electric aircraft toy, or the like. The electricity consumption system is not specifically limited in the embodiments of the present disclosure. For example, the vehicle may further include a controller and a motor, where the controller is configured to control a power battery to supply power to the motor, for example, for power requirements during starting, navigating, and driving of the vehicle.

Since the battery module 1000 is included, the electricity consumption system provided in the present disclosure can achieve all technical effects of the battery module 1000, which are not repeatedly described herein.

## Claims

1. A liquid cooling assembly (100), comprising:
a plurality of liquid cooling plates (1) each extending in a first direction and comprising a liquid cooling chamber (10), wherein the plurality of liquid cooling plates (1) are arranged at intervals in a second direction intersecting the first direction; and
at least one connection pipe (2) disposed between two adjacent ones of the liquid cooling plates (1) and communicating with the liquid cooling chamber (10) of each of the two adjacent liquid cooling plates (1);
wherein two ones of the liquid cooling plates (1) located at opposite sides of the liquid cooling assembly (100) in the second direction are provided with a liquid inlet opening (1A) and a liquid outlet opening (1B), respectively, and each of the liquid inlet opening (1A) and the liquid outlet opening (1B) is communicated with the liquid cooling chamber (10) of the liquid cooling plate (1) having the opening.

2. The liquid cooling assembly (100) of claim 1, wherein a hollow connection member (3) is mounted at a position of each of the liquid cooling plates (1) corresponding to the connection pipe (2), and the connection member (3) extends in the first direction and communicates with the liquid cooling chamber (10) of the liquid cooling plate (1); and
at least a portion of the connection pipe (2) is sleeved on a peripheral side of the connection member (3).

3. The liquid cooling assembly (100) of claim 2, wherein a sealing ring (4) is further mounted between the connection pipe (2) and the connection member (3), an accommodating groove (5) is annularly disposed at the peripheral side of the connection member (3), and at least a portion of the sealing ring (4) is accommodated within the accommodating groove (5).

4. The liquid cooling assembly (100) of claim 2, wherein the connection pipe (2) comprises:
a first sub-pipe section (21); and
two second sub-pipe sections (22) respectively located at opposite ends of the first sub-pipe section (21) in the second direction and communicating with the first sub-pipe section (21);
wherein a diameter of the second sub-pipe section (22) is greater than a diameter of the first sub-pipe section (21), and the second sub-pipe sections (22) are correspondingly sleeved on the connection members (3).

5. The liquid cooling assembly (100) of claim 1, wherein an orthographic projection of the connection pipe (2) on the liquid cooling plates (1) in the second direction entirely falls on the liquid cooling plates (1).

6. The liquid cooling assembly (100) of any one of claims 1-5, wherein four connection pipes (2) are disposed between the two adjacent liquid cooling plates (1), every two ones of the connection pipes (2) are defined as one pipe group (20), and two pipe groups (20) are disposed oppositely in the first direction.

7. The liquid cooling assembly (100) of claim 6, wherein each of the liquid cooling plates (1) further comprises one liquid cooling channel extending in the first direction, and the liquid cooling chamber (10) of the liquid cooling plate (1) comprises the liquid cooling channel;
a diameter of one of the connection pipes (2) in each of the pipe groups (20) is defined as D1, and a diameter of another one of the connection pipes (2) in the each of the pipe groups (20) is defined as D2, wherein a relationship between the D1 and the D2 satisfy: 1.1D1≤D2≤1.5D1.

8. The liquid cooling assembly of any one of claims 1-7, wherein the liquid cooling plates (1) are disposed in a flat plate shape in the first direction.

9. A battery module (1000), comprising:
the liquid cooling assembly (100) of any one of claims 1-8, wherein a portion of the plurality of liquid cooling plates (1) in the liquid cooling assembly (100) comprises one or more first liquid cooling plates (31); and
a plurality of cell rows (6) arranged in the second direction;
wherein each of the first liquid cooling plates (31) is located between two adjacent ones of the cell rows (6) and thermally coupled to the two adjacent cell rows (6).

10. The battery module (1000) of claim 9, wherein another portion of the plurality of liquid cooling plates (1) in the liquid cooling assembly (100) comprises one or more second liquid cooling plates (32); and the plurality of cell rows (6) comprise a first cell row (101) located at one end of the plurality of cell rows (6) in the second direction, and one of the second liquid cooling plates (32) is located on one side of the first cell row (101) away from the plurality of cell rows (6) and thermally coupled to the first cell row (101).

11. The battery module (1000) of claim 10, wherein each of the first liquid cooling plates (31) has a first liquid cooling channel, each of the second liquid cooling plates (32) has a second liquid cooling channel, and a volume of the first liquid cooling channel is greater than a volume of the second liquid cooling channel, and wherein a thickness of the first liquid cooling plate (31) is greater than a thickness of the second liquid cooling plate (32).

12. The battery module (1000) of any one of claims 9-11, further comprising: a support (40), wherein the support (40) is provided with a plurality of cell mounting grooves (401), and each of the cell rows (6) is located in corresponding one of the cell mounting grooves (401);
wherein each of the cell rows (6) comprises a plurality of cells (61) arranged in a first direction perpendicular to the second direction; and each of the cells (61) comprises a pressure relief valve (14), each of the cell mounting grooves (401) is provided with a plurality of pressure relief holes (402), and each of the pressure relief holes (402) corresponds to the pressure relief valve (14) of corresponding one of the cells (61); and
wherein a portion of the pressure relief valve of each of the cells is located in corresponding one of the pressure relief holes.

13. The battery module (1000) of any one of claims 9-11, wherein each of the cell rows (6) comprises a plurality of cells (61) arranged in a first direction perpendicular to the second direction, each of the cells (61) comprises a housing and a negative electrode (12), and materials of both the housing and the negative electrode (12) are steel.

14. The battery module (1000) of any one of claims 9-14, further comprising an integrated bus bar assembly (50) that comprises a busbar; each of the cell rows (6) comprises a plurality of cells (61) arranged in a first direction perpendicular to the second direction, wherein each of the cells (61) comprises a positive electrode (11) and a negative electrode (12), and the busbar is electrically connected to the positive electrode (11) and the negative electrode (12) of the cell (61);
wherein the integrated bus bar assembly (50) further comprises a first insulating film and a second insulating film located at both sides of the busbar, and the first insulating film, the busbar, and the second insulating film are fixed by hot pressing.

15. An electricity consumption system, comprising the battery module of any one of claims 9-14.
